# EUROPÄISCHE PATENTSCHRIFT

(11) **EP 4 065 998 B1**
(45) Veröffentlichungstag und Bekanntmachung des Hinweises auf die Patenterteilung: **03.06.2026**
(21) Anmeldenummer: 20793690.7
(22) Anmeldetag: 21.10.2020
(51) Int. Cl.: G01R 35/00, H02P 21/00, H02P 21/22

(54) **VERFAHREN UND VORRICHTUNG ZUR KALIBRIERUNG EINER REGELUNG EINER ELEKTRISCHEN MASCHINE**
METHOD AND DEVICE FOR CALIBRATING THE CONTROL OF AN ELECTRICAL MACHINE
PROCÉDÉ ET DISPOSITIF D'ÉTALONNAGE DE LA COMMANDE D'UNE MACHINE ÉLECTRIQUE

(30) Priorität: 29.11.2019 DE 102019218532
(43) Veröffentlichungstag der Anmeldung: 05.10.2022
(73) Patentinhaber: Robert Bosch GmbH, 70442 Stuttgart (DE)
(72) Erfinder: HIRSCH, Michele, 73730 Esslingen (DE); CHEN, Yuping, 71706 Markgroeningen (DE)
(86) Internationale Anmeldenummer: PCT/EP2020/079550
(87) Internationale Veröffentlichungsnummer: WO 2021/104753

(56) Entgegenhaltungen:
- DE-A1- 102007 003 874
- DE-A1- 102016 201 746
- US-A1- 2014 145 655

## Beschreibung

Die Erfindung betrifft ein Verfahren und eine Vorrichtung zur Kalibrierung einer Regelung einer elektrischen Maschine für einen vorgebbaren Drehmomentwert. Ferner betrifft die Erfindung ein elektrisches Antriebssystem mit einer entsprechenden Vorrichtung und ein Fahrzeug mit einem elektrischen Antriebssystem sowie ein Computerprogramm und ein computerlesbares Speichermedium.

### Stand der Technik

Die Druckschriften DE 10 2007 003874 A1, DE 10 2016 201746 A1 und US 2014/145655 A1 offenbaren Verfahren und Vorrichtungen zur Kalibrierung einer Regelung einer elektrischen Maschine.

Elektrische Drehfeldmaschinen, insbesondere permanenterregte Synchronmaschinen mit vergrabenen Magneten, werden für die Erzeugung eines Wunschmomentes mittels einer geeigneten Kombination von direktem Drehmoment und Reluktanzmoment angesteuert. Bei der feldorientierten Regelung werden das direkte Drehmoment und das Reluktanzmoment mittels entsprechender Wahl der d- und q-Strom- Betriebspunkte ((id,iq) im rotorfesten Koordinatensystem eingestellt. Für die Stromregelung in einer Feldorientierten Regelung (FOC), insbesondere im Grunddrehzahlbereich, wird der zugehörige Strom für ein gewünschtes Drehmoment aus einer Ortskurve, der sogenannten MTPC (maximum torque per current) ermittelt. Diese MTPC Ortskurven können unter der Annahme einer idealen Maschine mit bekanntem Induktivitäten Ld und Lq z.B. analytisch bestimmt werden. Für reale Maschinen mit Sättigungseffekten ist bevorzugt ein weiterer Ansatz die MTPC Ortskurve numerisch aus Simulationsdaten (z.B. Finite Elemente Simulationen) zu generieren. Weitere Abhängigkeiten, beispielsweise Temperaturabhängigkeiten, interne E-Maschinen-Verluste, Streuungen von Materialparametern und Flüssen, lassen in vielen Fällen als gangbarsten Weg eine experimentelle Bestimmung der MTPC Ortskurve am Prüfstand erscheinen, bevorzugt exemplarisch an einer golden sample Maschine. Dabei werden Exemplarstreuungen, Toleranzen etc. vernachlässigt. Es wird beispielsweise ein Kennfeld des Drehmoments über id/iq abgetastet, Ströme und Drehmomente gemessen und die Punkte für den kürzesten Stromzeiger für gewünschte Drehmomente ermittelt und geeignet abgelegt. Dieses Vorgehen ist oft aufwändig und langsam und daher kostspielig.

Es besteht daher ein Bedürfnis für alternative Verfahren und Vorrichtungen zur Kalibrierung einer Regelung einer elektrischen Maschine für einen vorgebbaren Drehmomentwert.

### Offenbarung der Erfindung

Die Erfindung wird durch die Merkmale der unabhängigen Ansprüche definiert.

Es wird ein Verfahren zur Kalibrierung einer Regelung, bevorzugt einer Stromregelung, einer elektrischen Maschine für einen vorgebbaren Drehmomentwert bereitgestellt. Die elektrische Maschine wird mit einer feldorientierten Regelung betrieben. Das Verfahren umfasst die Schritte:
a.) Vorgeben eines Stromvektors zur Erzeugung des vorgebbaren Drehmomentwertes mittels einer anschließbaren elektrischen Maschine. Der Stromvektor weist als Parameter eine Länge und eine Richtung auf.
b.) Vorgeben eines Testsignals und Überlagern des Stromvektors mit dem Testsignal.
c.) Erfassen eines aus der Überlagerung resultierenden Antwortsignals, bevorzugt die Amplitude des resultierenden Antwortsignals, mittels eines Sensors,
d.) Auswerten des Antwortsignals.
e.) Bestimmen eines kalibrierten Stromvektors in Abhängigkeit der Auswertung des Antwortsignals.
f.) Betreiben der Regelung der elektrischen Maschine für den vorgebbaren Drehmomentwert mittels Vorgeben des kalibrierten Stromvektors.

Der Betrieb elektrischer Maschinen mittels feldorientierten Regelungen ist bekannt. Dabei werden die Wechselgrößen der Phasenströme jeweils in ein mit der

Frequenz der Wechselgrößen rotierendes Koordinatensystem übertragen. Innerhalb des rotierenden Koordinatensystems ergeben sich dann im stationären Betrieb der elektrischen Maschine aus den Wechselgrößen Gleichgrößen, auf die alle üblichen Verfahren der Regelungstechnik angewandt werden können. Aufgrund der mehrphasigen phasenversetzten in den Stator eingeprägten Wechselströme ergibt sich beim Betrieb der elektrischen Maschine ein drehendes Magnetfeld, bestehend aus einem Stator- und einem Rotorfluss. Die Regelung der elektrischen Maschine gibt in Abhängigkeit eines vorgebbaren Drehmomentwertes einen Statorstroms vor. Innerhalb des rotierenden Koordinatensystems, dem d/q-Koordinatensystems, welches sich synchron mit dem Rotorfluss dreht und dessen d-Achse in Richtung des Rotorflusses zeigt, wird ein Statorstrom als Statorstromzeiger oder Statorstromvektor repräsentiert, welcher über seine Länge und seine Richtung charakterisiert wird. Dieser Stromzeiger dreht sich synchron mit dem rotierenden Stator- oder Rotorfluss der elektrischen Maschine. In dem d/q Koordinatensystem kann der Stromzeiger entsprechend seiner Länge und seiner Richtung mittels zwei senkrecht aufeinander stehenden Komponenten Id und Iq dargestellt werden, welche im stationären Fall Gleichgrößen sind. In diesem Koordinatensystem können maschinenspezifische Linien dargestellt werden, entlang derer die elektrische Maschine ein konstantes Drehmoment abgibt, sogenannte Iso-Drehmomenten-Linien. Auf gewünschte Betriebspunkte auf diesen Iso-Drehmomentenlinien kann eine Regelung einer elektrischen Maschine mittels Kennfeldern zugreifen, wobei sich diese Parameter aufgrund oben genannter Abhängigkeiten für jede Maschine (Exemplarstreuungen), die Rotortemperatur und über Laufzeit der Maschine ändern können und somit kalibriert werden sollten. Für gleich lange Stromvektoren gibt es nur eine ganz bestimmte Richtung, bei welcher das maximale Drehmoment von einer angeschlossenen elektrischen Maschine erzeugt wird. In einem Schritt des Verfahrens wird ein Stromvektor vorgegeben zur Erzeugung eines vorgebbaren Drehmomentwertes. Zur Überprüfung, ob es sich dabei um die richtige Richtung zur Erzeugung des maximalen Drehmoments handelt wird ein Testsignal vorgegeben und dem Stromvektor überlagert. Diese Überlagerung führt bei einer angeschlossenen elektrischen Maschine zu einer Schwingung des abgegebenen Drehmomentes. Diese Schwingung im Drehmoment führt aufgrund der mechanischen Kopplung der elektrischen Maschine mit dem Gehäuse zu einer mechanischen und/ oder akustischen Schwingung des Gehäuses und damit verbundener Bauteile. Das mechanische Übertragungsverhalten des mechanischen Systems führt zu einer Geräuschanregung einer angeschlossenen elektrischen Maschine und/oder der Leistungselektronik, die mit einem geeigneten Sensor, z.B. akustisch, messbar ist. Die Drehmomentschwingung oder daraus resultierende Schwingungen werden als ein Antwortsignal aus der Überlagerung des Stromvektors und des Testsignals mittels eines Sensors erfasst. Dieses Antwortsignal wird ausgewertet und in Abhängigkeit der Auswertung des Antwortsignals wird der kalibrierte Stromvektor, bevorzugt die Richtung des kalibrierten Stromvektors bestimmt. Der Parameter der Richtung eines Stromvektors zur Abgabe eines vorgebbaren Drehmomentwertes wird somit kalibriert und in einem Kennfeld abgelegt. Anschließend wird die Regelung der elektrischen Maschine für den vorgebbaren Drehmomentwert mittels Vorgeben des kalibrierten Stromvektors betrieben.

Vorteilhaft wird ein Verfahren zur Kalibrierung einer Regelung, bevorzugt einer Stromregelung, einer elektrischen Maschine für einen vorgebbaren Drehmomentwert bereitgestellt. Bevorzugt wird das Verfahren für eine integrierte elektrische Achse, bestehend aus der Drehfeldmaschine und einer an die Maschine mechanisch angebaute, bevorzugt mechanisch stark oder fest gekoppelte, oder integrierte Leistungselektronik bereitgestellt. Das Verfahren ermöglicht die Durchführung des Verfahrens für jede einzelne elektrische Maschine. Es kann sowohl am Ende der Produktionslinie und/oder während der Lebenszeit des elektrischen Antriebs beliebig, auch während eines regulären Fahrbetriebs durchgeführt werden. Bevorzugt umfasst eine Antriebskomponente (z.B. eine eAchse) den Sensor und das Verfahren. Es wird eine Möglichkeit bereitgestellt, das Verfahren während einer Inbetriebnahme, einer Prüfung am Bandende oder im Fahrbetrieb ablaufen zu lassen. So können die Kalibrierparameter exemplarspezifisch, temperaturabhängig und/oder alterungsabhängig bestimmt und nachjustiert oder nachgelernt werden. Es wird ein Verfahren geschaffen, welches eine selbstlernende/selbstkalibrierende Regelung für einen elektrischen Antrieb bereitstellt. Eine Selbst-Kalibrierung für die MTPC-Ortskurve wird ermöglicht, die unabhängig von einem Prüfstand und externer Messsensorik abläuft.

Das Testsignal weist eine Länge und eine Richtung auf, wobei die Richtung orthogonal zu dem Stromvektor ausgerichtet ist, das Testsignal zu beiden Seiten des Stromvektors oszilliert und bevorzugt mit dem Stromvektor vektoriell addiert wird.

Das Testsignal weist entsprechend dem vorgegebenen Stromvektor als Parameter eine Länge und eine Richtung auf. Die Überlagerung erfolgt vektoriell. In dem rotierenden Koordinatensystem ergibt sich eine vektorielle Addition des Stromvektors und des Testsignals. Das Testsignal ist orthogonal zu dem Stromvektor ausgerichtet und oszilliert, bevorzugt mit einer vorgebbaren Frequenz. Aufgrund der Oszillation des Testsignals erzeugt eine angeschlossene elektrische Maschine je nach aktueller Länge und Richtung des Testsignals ein unterschiedliches Drehmoment insbesondere des harmonisch oszillierenden Anteils. Es resultieren zwei markante Antwortsignalarten. Die Amplitude der Schwingung des Drehmoments wird größer, je größer die Abweichung der Richtung des vorgegebenen Stromvektors von dem mit dessen Länge erzielbaren maximalen Drehmoments wird. Die Schwingung des Drehmoments und des Testsignals weisen dabei eine gemeinsame Phasenlage und Frequenz auf. Die Amplitude der Schwingung des Drehmoments wird kleiner, je geringer die Abweichung der Richtung des vorgegebenen Stromvektors von dem mit dessen Länge erzielbaren maximalen Drehmoments wird. Die Schwingung des Drehmoments enthält einen Frequenzanteil bei der doppelten Frequenz des Testsignals genau dann, wenn die Richtung des Stromvektors im sehr nahem Umfeld derjenigen liegt, die zu dem mit dieser Länge erzielbaren Drehmoment gehört. Das Auftreten dieses doppelten Frequenzanteils liegt daran, dass aufgrund der typischen Krümmung der Isodrehmomentenlinien eine Schwingung in tangentialer Richtung der Isodrehmomentenlinie rechts und links vom Ausgangs-Stromvektor zu einem Minimum des Drehmoments führt, der doppelten Frequenz. Die minimierte Schwingung des Drehmoments oder der verschwindende Drehmomentenrippel oder auch das Auftreten der doppelten Frequenz kann mit geeigneten Frequenzen der Harmonischen akustisch detektiert werden, also wenn die entsprechende Frequenz im gemessenen Geräusch verschwindet oder auftaucht. Als besonders günstige Frequenzen der Oszillation des Testsignals sind solche zu wählen, bei denen die angeschlossene Maschine keine oder nur geringe intrinsische elektromagnetische Anregungen besitzt, dies könnten beispielsweise für eine 3 phasige elektrische Maschine bevorzugt die Ordnung 5 oder 7 im Drehmoment sein, da intrinsische Anregungen hier beispielhaft bei der Ordnung 6 und 12 erwartet werden. Eine günstige Anregungsordnung bezogen auf die eingestellte elektrische Frequenz für dieses Verfahren wird bevorzugt so gewählt, dass bei dieser Ordnung ohne vorgegebenes Testsignal keine oder kaum intrinsische elektromagnetische Ordnungen in der Schwingung des Drehmoments erzeugt werden. Damit wäre das zu erwartende Antwortsignal allein mit dem Verfahren gekoppelt und das verschwindende Antwortsignal kann als Zielgröße verwendet werden.

Weiterhin ist bevorzugt bei der Wahl der Anregungsfrequenz bzw. Ordnung bevorzugterweise eine Frequenz/Ordnung zu wählen, die vom Sensor gut detektierbar ist, was die Sensorempfindlichkeit und vor allem das Übertragungsverhalten von dieser Frequenz eines Drehmomentrippels auf den Sensor betrifft.

Vorteilhaft wird ein mögliches Testsignal bereitgestellt, welches eine Beurteilung der Richtung des vorgegebenen Stromvektors hinsichtlich des erzielbaren maximalen Drehmoments ermöglicht.

In einer anderen Ausgestaltung der Erfindung werden die Schritte a.) bis d.) mindestens zweimal wiederholt, wobei die Richtung des Stromvektors jeweils um einen vorgebbaren Betrag verändert vorgegeben wird. Bei der Auswertung der Antwortsignale gemäß Schritt d.) werden die erfassten Antwortsignale verglichen. Dabei wird ein Gradient oder ein Minimum der erfassten Antwortsignale ermittelt.

Das Vorgeben des Stromvektors und des Testsignals werden mindestens zweimal mit unterschiedlichen Richtungen des Stromvektors wiederholt. Die Antwortsignale werden ausgewertet, indem die Antwortsignale, bevorzugt die Amplituden der Antwortsignale, verglichen werden. Bevorzugt wird anhand der Größe und der Veränderung der Amplitude, bevorzugt in Abhängigkeit des Gradienten und/oder des Minimums, des Antwortsignals abgeleitet, ob der vorgegebene Stromvektor bei einer angeschlossenen elektrischen Maschine das maximale Drehmoment erzeugt oder in welche Richtung der Stromvektor bei weiteren Wiederholungen verändert werden muss, um sich der Richtung bei der eine angeschlossenen elektrischen Maschine das maximale Drehmoment erzeugt, weiter anzunähern. Mit größerer Länge oder einem größeren Betrag des Testsignals erhöht sich die Amplitude der resultierenden Schwingung des Drehmomentes. Daher ist bei zu großen Amplituden die Länge des Testsignals zu reduzieren.

Vorteilhaft wird ein Verfahren zur iterativen Annäherung zu der Richtung des Stromvektors, bei der eine angeschlossene elektrische Maschine das maximale Drehmoment erzeugt, bereitgestellt.

In einer anderen Ausgestaltung der Erfindung wird die Richtung des Stromvektors jeweils bei der Wiederholung der Schritte um einen, bevorzugt in jedem Iterationsschritt neu, vorgebbaren Betrag in positive und negative Richtung des zuletzt vorgegebenen Stromvektors vorgegeben oder jeweils in positive oder negative Richtung des zuletzt vorgegebenen Stromvektors. Die Wiederholung der Schritte wird bevorzugt ausgeführt, bis der Gradient zwischen den, bevorzugt ungefähr letzten drei, Antwortsignalen einen ersten vorgebbaren Grenzwert unterschreitet oder das Antwortsignal einen zweiten vorgebbaren Grenzwert unterschreitet.

Vorteilhaft werden unterschiedliche Varianten zur iterativen Annäherung zu der Richtung des Stromvektors, bei der eine angeschlossene elektrische Maschine das maximale Drehmoment erzeugt, bereitgestellt.

In einer anderen Ausgestaltung der Erfindung wird gemäß Schritt e.) der kalibrierte Stromvektors vorgegeben, indem die Parameter des vorgegebenen Stromvektors, dessen erfasstes Antwortsignal minimal ist, für den kalibrierten Stromvektor vorgegeben.

Wenn die Richtung des Stromvektors erreicht ist, bei der eine angeschlossene elektrische Maschine das maximale Drehmoment erzeugen würde, so resultiert ein minimales Antwortsignal, bevorzugt eine minimale Amplitude des Antwortsignals. Die dann vorliegenden Parameter des Stromvektors, die Länge des Vektors und die Richtung des Vektors werden als Parameter für den kalibrierten Stromvektor vorgegeben.

Vorteilhaft wird ein Verfahren zur Bestimmung des kalibrierten Stromvektors vorgegeben.

Ferner betrifft die Erfindung ein Computerprogramm, welches Befehle umfasst, die bei der Ausführung durch einen Computer diesen veranlassen, die Schritte des bisher beschriebenen Verfahrens auszuführen.

Ferner betrifft die Erfindung ein computerlesbares Speichermedium, umfassend Befehle, die bei der Ausführung durch einen Computer diesen veranlassen, die Schritte des bisher beschriebenen Verfahrens auszuführen.

Ferner betrifft die Erfindung eine Vorrichtung zur Kalibrierung einer Regelung einer elektrischen Maschine. Die Vorrichtung umfasst einen, bevorzugt mechanischen, Sensor. Weiter umfasst die Vorrichtung einen Schaltungsträger, wobei der Schaltungsträger einen Testsignalgenerator aufweist und eine Recheneinheit. Die Vorrichtung ist dazu eingerichtet, die Schritte des beschriebenen Verfahrens auszuführen.

Vorteilhaft wird eine Vorrichtung zur Kalibrierung einer Regelung einer elektrischen Maschine bereitgestellt. Diese Vorrichtung umfasst einen, bevorzugt mechanischen, Sensor zur Erfassung des aus der Überlagerung des Stromvektors und des Testsignals resultierenden Antwortsignals. Die Vorrichtung umfasst weiter zur Vorgabe des Testsignals einen Testsignalgenerator und eine Recheneinheit zur Durchführung des beschriebenen Verfahrens.

In einer anderen Ausgestaltung der Erfindung ist der Sensor mechanisch fest oder im Wesentlichen starr mit der elektrischen Maschine verbunden. Alternativ ist der Sensor fest auf den Schaltungsträger aufgebaut und der Schaltungsträger fest an oder in der elektrischen Maschine integriert.

Für eine hoch aufgelöste und ungestörte Erfassung des Antwortsignals ist eine mechanisch feste Verbindung mit der elektrischen Maschine oder über einen Schaltungsträger, welcher an oder in der elektrischen Maschine angebracht ist, vorgesehen. Alternativ kann natürlich auch mit einem Sensor außerhalb der Vorrichtung oder Leistungselektronik durchgeführt werden, z.B. einem Mikrofon an oder neben der elektrischen Maschine oder auch mittels einem Körperschallsensor, beispielsweise ausgeführt als an einer Oberfläche, bevorzugt der elektrischen Maschine oder eines Steuergerätes oder Inverters, montierter Beschleunigungssensor.

Vorteilhaft wird eine Position zur Befestigung des Sensors für eine gute Signalübertragung bereitgestellt.

In einer anderen Ausgestaltung der Erfindung ist der mechanische Sensor ein Mikrofon, ein Beschleunigungssensor oder ein Körperschallsensor oder ein Drehzahlsensor.

Vorteilhaft werden Sensoren bereitgestellt, die zur Erfassung des Antwortsignals, welches aus der Schwingung des Drehmomentes resultiert bereitgestellt. Die Schwingungen des Drehmomentes können akustisch, mittels Beschleunigungsmessung bevorzugt an einer mechanisch festen Einheit mit der elektrischen Maschine oder mittels Körperschall erfasst werden. Ebenso resultiert aus den Schwingungen des Drehmomentes eine Drehzahländerung der elektrischen Maschine, sodass auch mittels eines Drehzahlsensors eine Erfassung der Antwortsignale möglich ist.

Ferner betrifft die Erfindung ein elektrisches Antriebssystem mit einer elektrischen Maschine und einer beschriebenen Vorrichtung. Ein derartiges elektrisches Antriebssystem dient beispielsweise dem Antrieb eines elektrischen Fahrzeugs. Mittels des Verfahrens und der Vorrichtung wird ein sinnvoll geregelter Betrieb des Antriebstrangs ermöglicht.

Ferner betrifft die Erfindung ein Fahrzeug, mit einem beschriebenen Antriebssystem. Vorteilhaft wird somit ein Fahrzeug bereitgestellt, welches eine Vorrichtung umfasst, mit der eine Regelung einer elektrischen Maschine kalibriert werden kann.

Es versteht sich, dass die Merkmale, Eigenschaften und Vorteile des erfindungsgemäßen Verfahrens entsprechend auf die Vorrichtung bzw. das Antriebssystem und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

Im Folgenden soll die Erfindung anhand einiger Figuren näher erläutert werden, dazu zeigen:
Figur 1
   eine schematische Darstellung einer Vorrichtung zur Kalibrierung einer Regelung einer elektrischen Maschine
Figur 2
   ein Diagramm der dq-Stromebene mit eingetragenen Isodrehmomentenlinien zur Anwendung einer feldorientierten Regelung.
Figur 3
   ein schematisch dargestelltes Fahrzeug mit einem Antriebsstrang,
Figur 4
   ein schematisch dargestelltes Ablaufdiagramm für ein Verfahren zur Kalibrierung eines Offsetwinkels einer feldorientieren Regelung einer elektrischen Maschine.

### Ausführungsformen der Erfindung

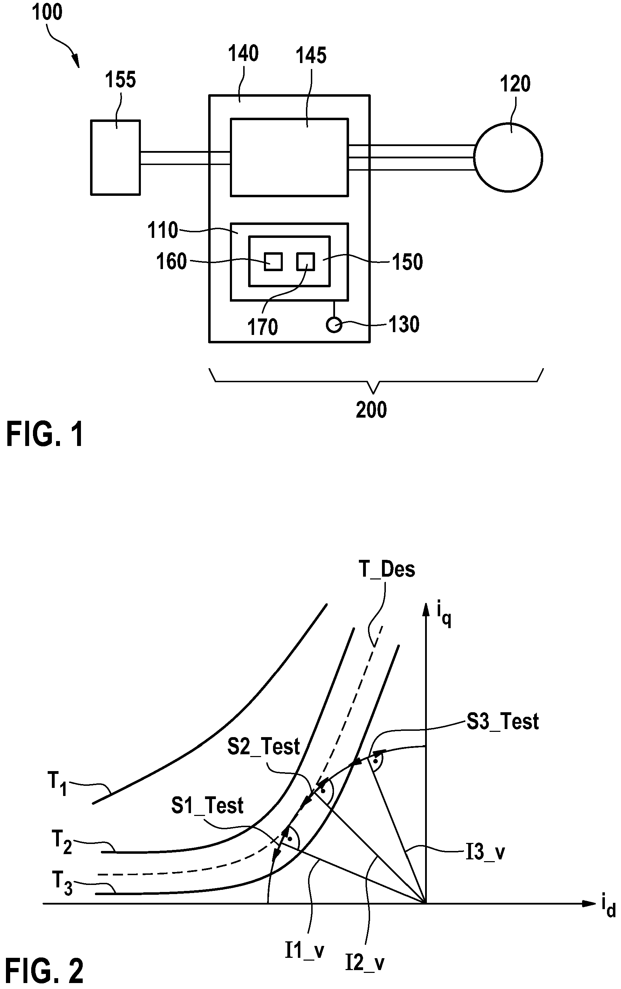

Die Figur 1 zeigt eine Vorrichtung 100 zur Kalibrierung einer Regelung 110 einer elektrischen Maschine 120. Die Vorrichtung umfasst einen Sensor 130, bevorzugt einen mechanischen Sensor mit einer mechanisch starren oder festen direkten oder indirekten Verbindung zu der elektrischen Maschine 120. Weiter umfasst die Vorrichtung einen Schaltungsträger 150, wobei der Schaltungsträger einen Testsignalgenerator 160 aufweist und eine Recheneinheit 170. Bevorzugt ist die Regelung 110 in einem Inverter 140 integriert, wobei der Inverter eine Leistungselektronik 145, bevorzugt eine B6 Brücke, zur Speisung der anschließbaren Maschine 120 aus einer Batterie 155 umfasst. Ferner ist in Fig. 1 das elektrisches Antriebssystem 200 mit der Vorrichtung 100 und der elektrischen Maschine 120 dargestellt.

Figur 2 zeigt ein Diagramm der dq-Stromebene mit eingetragenen Isodrehmomentenlinien zur Anwendung einer feldorientierten Regelung. Innerhalb des rotierenden Koordinatensystems ergeben sich im stationären Betrieb der elektrischen Maschine aus den Wechselgrößen, beispielsweise der Phasenströme, Gleichgrößen. In dem d/q-Koordinatensystems, welches sich synchron mit dem Rotorfluss dreht und dessen d-Achse in Richtung des Rotorflusses zeigt, wird ein Statorstrom als Stromvektor Ix_v repräsentiert, welcher über seinen Betrag oder seine Länge I_s und seine Richtung Ix_a charakterisiert wird. Dieser Stromvektor Ix_v dreht sich synchron mit dem rotierenden Stator- oder Rotorfluss der elektrischen Maschine. In diesem Koordinatensystem können maschinenspezifische Linien T1, T2, T3, T_Des dargestellt werden, entlang derer die elektrische Maschine ein konstantes Drehmoment abgibt. Auf die Parameter dieser Linien kann eine Regelung einer elektrischen Maschine mittels Kennfeldern oder parametrierbarer Daten zugreifen. Mittels Variation der Richtung Ix_a des Stromvektors, und somit unterschiedlichen id und iq-Komponenten können die unterschiedlichen Betriebspunkte auf diesen Linien eingestellt werden. Mit I1_v, I2_v und I3_v sind drei Stromvektoren mit gleicher Länge Is dargestellt, deren Richtungen Ix_a sich jeweils um einen vorgebbaren Betrag Ix_a_Delta unterscheiden. Orthogonal zu diesen Stromvektoren sind die vorgebbaren Testsignale S1_Test, S2_Test, S3_Test dargestellt. Aus dem Diagramm geht hervor, dass die oszillierenden Testsignale S1_Test und S3_Test mehr Isodrehmomentenlinien schneiden als das Testsignal S2_Test. Daher ergeben sich aus der Überlagerung der Stromvektoren und der Testsignale S1_Test und S3_Test größere Drehmomentschwankungen als bei der Überlagerung des Stromvektors I2_v und des Testsignals S2_Test mit einer angeschlossenen elektrischen Maschine. Entsprechend werden in diesem Beispiel die Parameter, bevorzugt die Richtung, des Stromvektors I2_v für den kalibrierten Stromvektor I_Vk übernommen.

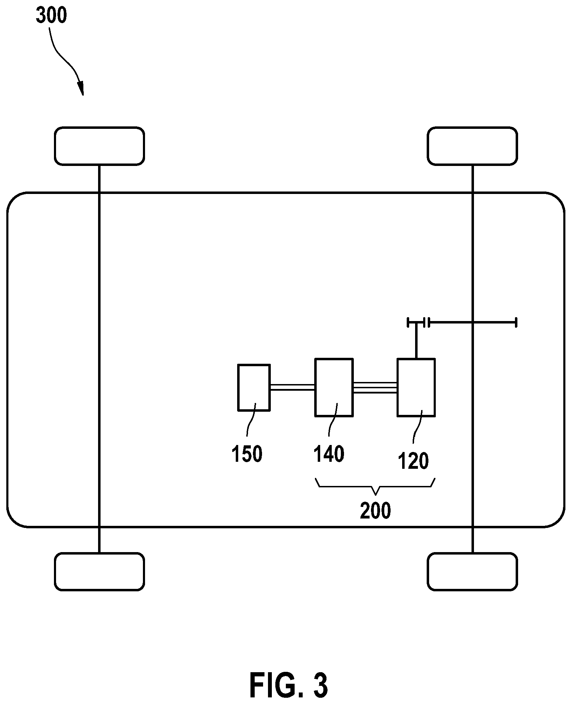

Die Figur 3 zeigt ein schematisch dargestelltes Fahrzeug 300 mit einem elektrischen Antriebssystem 200. Das Antriebssystem 200 umfasst die Vorrichtung 100 zur Kalibrierung der Regelung 110 der elektrischen Maschine 120 in dem Inverter 140 und die elektrische Maschine 210. Bevorzugt umfasst das elektrische Antriebssystem die Batterie 150.

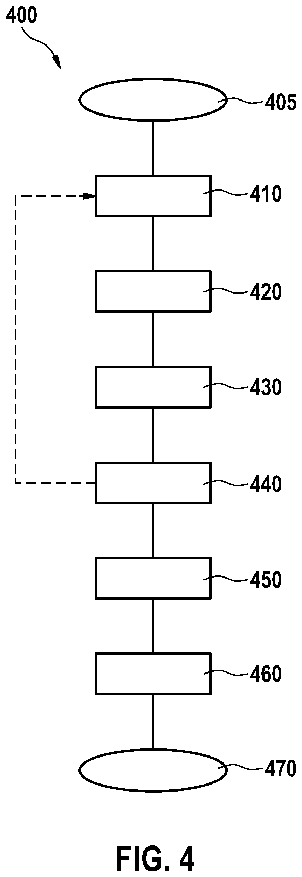

Die Figur 4 zeigt einen schematischen Ablauf eines Verfahrens 400 zur Kalibrierung einer Regelung einer elektrischen Maschine 120 für einen vorgebbaren Drehmomentwert T_Des. Mit Schritt 405 startet das Verfahren. Die elektrische Maschine 120 wird mit einer feldorientierten Regelung betrieben. Das Verfahren umfasst die Schritte:
a.) Vorgeben eines Stromvektors Ix_v, 410 zur Erzeugung des vorgebbaren Drehmomentwertes T_Des mittels einer anschließbaren elektrischen Maschine 120, wobei der Stromvektor Ix_v als Parameter eine Länge I_s und eine Richtung Ix_a aufweist
b.) Vorgeben eines Testsignals Sx_Test, 420 und Überlagern des Stromvektors Ix_v mit dem Testsignal Sx_Test,
c.) Erfassen 430 eines aus der Überlagerung resultierenden Antwortsignals Sx_Antw mittels eines Sensors 130,
d.) Auswerten 440 des Antwortsignals Sx_Antw,
e.) Bestimmen 450 eines kalibrierten Stromvektors I_Vk in Abhängigkeit der Auswertung des Antwortsignals Sx_Antw
f.) Betreiben 460 der Regelung der elektrischen Maschine 120 für den vorgebbaren Drehmomentwert T_Des mittels Vorgeben des kalibrierten Stromvektors I_Vk. Die Schritte a.) bis d.) 410 - 440 werden bevorzugt mindestens zweimal wiederholt zur iterativen Annäherung zu der Richtung des Stromvektors Ix_v, bei der eine angeschlossene elektrische Maschine 120 das maximale Drehmoment erzeugt. Mit Schritt 470 endet das Verfahren.

## Patentansprüche

1. Verfahren (400) zur Kalibrierung einer Regelung einer elektrischen Maschine (120) für einen vorgebbaren Drehmomentwert (T_Des),
wobei die elektrische Maschine (120) mit einer feldorientierten Regelung betrieben wird,
mit den Schritten:
a.) Vorgeben eines Stromvektors (Ix_V) (410) zur Erzeugung des vorgebbaren Drehmomentwertes (T_Des) mittels einer anschließbaren elektrischen Maschine (120),
wobei der Stromvektor (Ix_V) als Parameter eine Länge (I_s) und eine Richtung (Ix_a) aufweist
b.) Vorgeben eines Testsignals (Sx_Test) (420) und Überlagern des Stromvektors (Ix_V) mit dem Testsignal (Sx_Test),
c.) Erfassen (430) eines aus der Überlagerung resultierenden Antwortsignals (Sx_Antw) mittels eines Sensors (130),
d.) Auswerten (440) des Antwortsignals (Sx_Antw),
e.) Bestimmen (450) eines kalibrierten Stromvektors (I_Vk) in Abhängigkeit der Auswertung des Antwortsignals (Sx_Antw),
f.) Betreiben (460) der Regelung der elektrischen Maschine (120) für den vorgebbaren Drehmomentwert (T_Des) mittels Vorgeben des kalibrierten Stromvektors (I_Vk),
**dadurch gekennzeichnet, dass** das Testsignal (Sx_Test) eine Länge (S_s) und eine Richtung (Sx_a) aufweist, wobei die Richtung (Sx_a) orthogonal zu dem Stromvektor (Ix_V) ausgerichtet ist, das Testsignal (Sx_Test) zu beiden Seiten des Stromvektors (Ix_V) oszilliert.

2. Verfahren nach Anspruch 1,
wobei die Schritte a.) bis d.) mindestens zweimal wiederholt werden,
wobei die Richtung (Ix_a) des Stromvektors (Ix_V) jeweils um einen vorgebbaren Betrag (Ix_a_Delta) verändert vorgegeben wird
wobei bei der Auswertung der Antwortsignale (Sx_Antw) gemäß Schritt d.) die erfassten Antwortsignale (Sx_Antw) verglichen werden und
ein Gradient oder ein Minimum der erfassten Antwortsignale (Sx_Antw) ermittelt wird.

3. Verfahren nach Anspruch 2, wobei die Richtung (Ix_a) des Stromvektors (Ix_V) jeweils um einen vorgebbaren Betrag (Ix_a_Delta) in positive und negative Richtung des zuletzt vorgegebenen Stromvektors (Ix_V) vorgegeben wird oder jeweils in positive oder negative Richtung des zuletzt vorgegebenen Stromvektors (Ix_V) vorgegeben wird.

4. Verfahren nach Anspruch 3,
wobei gemäß Schritt e.) der kalibrierte Stromvektors (I_Vk) vorgegeben wird, indem die Parameter des vorgegebenen Stromvektors (Ix_V), dessen erfasstes Antwortsignal (Sx_Antw) minimal ist, für den kalibrierten Stromvektor (I_Vk) vorgegeben werden.

5. Computerprogramm, umfassend Befehle, die bei der Ausführung des Programms durch einen Computer diesen veranlassen, das Verfahren/die Schritte des Verfahrens (400) nach Anspruch 1 bis 4 auszuführen.

6. Computerlesbares Speichermedium, umfassend Befehle, die bei der Ausführung durch einen Computer diesen veranlassen, das Verfahren/die Schritte des Verfahrens (400) nach Anspruch 1 bis 4 auszuführen.

7. Vorrichtung (100) zur Kalibrierung einer Regelung (110) einer elektrischen Maschine (120),
mit einem Sensor (130),
mit einem Schaltungsträger (150),
wobei der Schaltungsträger einen Testsignalgenerator (160) aufweist und eine Recheneinheit (170),
wobei die Vorrichtung dazu eingerichtet ist, die Schritte des Verfahrens nach einem der Ansprüche 1-4 auszuführen.

8. Vorrichtung nach Anspruch 7,
wobei der Sensor (130) mechanisch fest mit der elektrischen Maschine (120) verbunden ist oder der Sensor (130) fest auf den Schaltungsträger (150) aufgebaut ist und der Schaltungsträger (150) fest an oder in der elektrischen Maschine (120) integriert ist.

9. Vorrichtung nach Anspruch 8, wobei der Sensor (130) ein Mikrofon, ein Beschleunigungssensor oder Körperschallsensor oder ein Drehzahlsensor ist.

10. Elektrisches Antriebssystem (200) mit einer elektrischen Maschine (120) und einer Vorrichtung (100) nach einem der Ansprüche 7 bis 9.

11. Fahrzeug (300) mit einem elektrischen Antriebssystem (200) nach Anspruch 10.

## Claims

1. Method (400) for calibrating a control of an electrical machine (120) for a specifiable torque value (T_Des),
wherein the electrical machine (120) is operated using a field-oriented control, having the following steps:
a.) specifying a current vector (Ix_V) (410) to generate the specifiable torque value (T_Des) by means of a connectable electrical machine (120),
wherein the current vector (Ix_V) has a length (I_s) and a direction (Ix_a) as parameters,
b.) specifying a test signal (Sx_Test) (420) and superimposing the current vector (Ix_V) with the test signal (Sx_Test),
c.) capturing (430) a response signal (Sx_Antw) resulting from the superposition by means of a sensor (130),
d.) evaluating (440) the response signal (Sx_Antw),
e.) determining (450) a calibrated current vector (I_Vk) as a function of the evaluation of the response signal (Sx_Antw),
f.) operating (460) the control of the electrical machine (120) for the specifiable torque value (T_Des) by means of specifying the calibrated current vector (I_Vk),
**characterized in that** the test signal (Sx_Test) has a length (S_s) and a direction (Sx_a), wherein the direction (Sx_a) is aligned orthogonally to the current vector (Ix_V), and the test signal (Sx_Test) oscillates on both sides of the current vector (Ix_V).

2. Method according to Claim 1,
wherein steps a.) to d.) are repeated at least twice,
wherein the direction (Ix_a) of the current vector (Ix_V) is specified changed in each case by a specifiable absolute value (lx_a_Delta),
wherein upon the evaluation of the response signals (Sx_Antw) according to step d.), the captured response signals (Sx_Antw) are compared and
a gradient or a minimum of the captured response signals (Sx_Antw) is ascertained.

3. Method according to Claim 2, wherein the direction (Ix_a) of the current vector (Ix_V) is specified in each case by a predefinable absolute value (Ix_a_Delta) in the positive and negative direction of the last specified current vector (Ix_V) or is specified in each case in the positive or negative direction of the last specified current vector (Ix_V).

4. Method according to Claim 3,
wherein according to step e.), the calibrated current vector (I_Vk) is specified in that the parameters of the specified current vector (Ix_V), the captured response signal (Sx_Antw) of which is minimal, are specified for the calibrated current vector (I_Vk).

5. Computer program, comprising commands which, upon the execution of the program by a computer, cause it to carry out the method/the steps of the method (400) according to Claims 1 to 4.

6. Computer-readable storage medium, comprising commands which, upon the execution by a computer, cause it to carry out the method/the steps of the method (400) according to Claims 1 to 4.

7. Device (100) for calibrating a control (110) of an electrical machine (120), having a sensor (130),
having a circuit carrier (150),
wherein the circuit carrier has a test signal generator (160) and a computing unit (170),
wherein the device is configured to carry out the steps of the method according to any one of Claims 1-4.

8. Device according to Claim 7,
wherein the sensor (130) is mechanically fixedly connected to the electrical machine (120) or the sensor (130) is fixedly attached to the circuit carrier (150) and the circuit carrier (150) is fixedly integrated on or in the electrical machine (120).

9. Device according to Claim 8, wherein the sensor (130) is a microphone, an acceleration sensor or structure-borne sound sensor or a speed sensor.

10. Electrical drive system (200) having an electrical machine (120) and a device (100) according to any one of Claims 7 to 9.

11. Vehicle (300) having an electrical drive system (200) according to Claim 10.

## Revendications

1. Procédé (400) d'étalonnage d'une commande d'une machine électrique (120) pour une valeur de couple de rotation pouvant être prédéfinie (T_Des),
la machine électrique (120) fonctionnant avec une commande orientée champ,
avec les étapes :
a.) prédéfinition d'un vecteur de courant (Ix_V) (410) pour générer la valeur de couple de rotation pouvant être prédéfinie (T_Des) au moyen d'une machine électrique (120) raccordable,
le vecteur de courant (Ix_V) présentant une longueur (I_s) et une direction (Ix_a) en tant que paramètres
b.) prédéfinition d'un signal de test (Sx_test) (420) et superposition du vecteur de courant (Ix_V) au signal de test (Sx_test),
c.) détection (430) d'un signal de réponse (Sx_Antw) résultant de la superposition au moyen d'un capteur (130),
d.) évaluation (440) du signal de réponse (Sx_Antw),
e.) définition (450) d'un vecteur de courant étalonné (I_Vk) en fonction de l'évaluation du signal de réponse (Sx_Antw),
f.) fonctionnement (460) de la commande de la machine électrique (120) pour la valeur de couple de rotation pouvant être prédéfinie (T_Des) au moyen de la prédéfinition du vecteur de courant étalonné (I_Vk),
**caractérisé en ce que** le signal de test (Sx_test) présente une longueur (S_s) et une direction (Sx_a), la direction (Sx_a) étant orientée orthogonalement au vecteur de courant (Ix_V), le signal de test (Sx_test) oscillant des deux côtés du vecteur de courant (Ix_V).

2. Procédé selon la revendication 1,
les étapes a.) à d.) étant répétées au moins deux fois,
la direction (Ix_a) du vecteur de courant (Ix_V) étant prédéfinie de manière modifiée respectivement d'une valeur pouvant être prédéfinie (lx_a_Delta) les signaux de réponse (Sx_Antw) détectés étant comparés lors de l'évaluation des signaux de réponse (Sx_Antw) selon l'étape d.) et
un gradient ou un minimum des signaux de réponse (Sx_Antw) détectés étant déterminé.

3. Procédé selon la revendication 2, la direction (Ix_a) du vecteur de courant (Ix_V) étant prédéfinie respectivement d'une valeur pouvant être prédéfinie (Ix_a_Delta) dans des directions positive et négative du vecteur de courant (Ix_V) prédéfini en dernier lieu ou étant prédéfinie respectivement dans la direction positive ou négative du vecteur de courant prédéfini en dernier lieu (Ix_V).

4. Procédé selon la revendication 3,
le vecteur de courant étalonné (I_Vk) étant prédéfini selon l'étape e.) en ce que les paramètres du vecteur de courant (Ix_V) prédéfini, dont le signal de réponse (Sx_Antw) détecté est minimal, sont prédéfinis pour le vecteur de courant étalonné (I_Vk).

5. Produit de programme d'ordinateur, comprenant des instructions qui, lors de l'exécution du programme par un ordinateur, amènent celui-ci à exécuter le procédé/les étapes du procédé (400) selon les revendications 1 à 4.

6. Support de stockage lisible par ordinateur comprenant des instructions qui, lorsqu'elles sont exécutées par un ordinateur, amènent celui-ci à exécuter le procédé/les étapes du procédé (400) selon les revendications 1 à 4.

7. Dispositif (100) destiné à étalonner une commande (110) d'une machine électrique (120),
avec un capteur (130),
avec un support de circuit (150),
le support de circuit comportant un générateur de signaux de test (160) et une unité de calcul (170),
le dispositif étant mis au point pour exécuter les étapes du procédé selon l'une des revendications 1-4.

8. Dispositif selon la revendication 7,
le capteur (130) étant relié mécaniquement de manière fixe à la machine électrique (120) ou le capteur (130) étant monté de manière fixe sur le support de circuit (150) et le support de circuit (150) étant intégré de manière fixe sur ou dans la machine électrique (120).

9. Dispositif selon la revendication 8, le capteur (130) étant un microphone, un capteur d'accélération ou un capteur de bruit de structure ou un capteur de vitesse de rotation.

10. Système d'entraînement électrique (200) avec une machine électrique (120) et un dispositif (100) selon l'une des revendications 7 à 9.

11. Véhicule (300) avec un système d'entraînement électrique (200) selon la revendication 10.
